Europäisches Patentamt

European Patent Office

Office européen des brevets

(11) Publication number: **0 110 108**
**B1**

(12) **EUROPEAN PATENT SPECIFICATION**

(45) Date of publication of patent specification: **09.01.91**

(21) Application number: **83110542.4**

(22) Date of filing: **21.10.83**

(51) Int. Cl.⁵: **C 08 L 59/02, C 08 L 59/04,
C 08 K 5/05, C 08 K 5/09,
C 08 K 5/10**

(54) Polyacetal resin composition.

(30) Priority: **25.11.82 JP 206408/82**

(43) Date of publication of application:
**13.06.84 Bulletin 84/24**

(45) Publication of the grant of the patent:
**09.01.91 Bulletin 91/02**

(84) Designated Contracting States:
**BE DE FR GB NL**

(56) References cited:
**DE-A-2 050 770
DE-A-2 301 351
FR-A-1 565 761
US-A-4 274 986**

(73) Proprietor: **POLYPLASTICS CO. LTD.**
**30 Azuchimachi 2-chome
Higashi-ku Osaka-shi (JP)**

(72) Inventor: **Kaszga, Takuzo
16-7, Shimizu 2-chome Suginami-ku
Tokyo (JP)**
Inventor: **Ikenaga, Yukio
324, Miyashita Fuji-shi
Shizuoka (JP)**
Inventor: **Yamawaki, Masami
94-2, Gokanjima Fuji-shi
Shizuoka (JP)**
Inventor: **Tanimura, Keizo
52, Morishita Fuji-shi
Shizuoka (JP)**

(74) Representative: **Patentanwälte Grünecker,
Kinkeldey, Stockmair & Partner
Maximilianstrasse 58
D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention relates to a polyacetal resin composition showing excellent antistatic effect, surface luster, moldability and the like.

Thermoplastic polyacetal resin, which is superior in mechanical properties, thermal properties, long-range properties, moldability and the like, has been extensively used as engineering plastics for functional parts in various fields of industry such as mechanical industry and electric industry. However, such thermoplastic polyacetal resin produces troubles owing to static charge such as electrostatic noise, surface stain, adhesion and the like since it has higher surface resistance alike to almost plastics. Various kinds of antistatic agent have been used in order to overcome such troubles. Although such antistatic agents are effective also to polyacetal, for example ionic substances are not desired because they lead to discoloration, the reduction of thermal stability and the like of polyacetal. Although non-ionic antistatic agents are used for controlling such bed influences by ionic substances, in general non-ionic antistatic agents show lower antistatic effect, thereby it is required to add a large amount of them in order to lower electrostatic characteristics of thermoplastic polyacetal resin to the practically usable level.

However, the addition of such a large amount of such nonionic antistatic agents leads to a decrease of mechanical properties and moldability of molded products since they also show the effects as lubricants. Further, solid antistatic agents such as glycerine monostearate are apt to form wax-like bleed on the surface of molded products and liquid antistatic agents are apt to form liquid bleed on the surface of molded products, thereby an external appearance and function of molded products are disordered. In addition, the addition of a large amount of non-ionic antistatic agents also leads to a reduction of thermal stability.

U.S. Patent No. 42 74 986 discloses a polyacetal molding composition which is sufficiently improved in reduction of the electrostatic property without producing bad influences such as coloring, excess bleed, reduction of thermal stability and change in moldability. However, as a result of repeated investigations on the effects of various kinds of substance upon polyacetel the inventors found that the addition of a small amount of organometallic salt to said composition leads to the production having more excellent thermal stability, moldability and antistatic effect. This led to the present invention.

That is to say, the present invention relates to a polyacetal composition comprising a polyacetal, an aliphatic acid ester of a polyhydric alcohol having a hydroxy group and polyethylene glycol, characterized in that that composition further contains 0.01 to 5 percent by weight, based on the total composition, of a metal salt of an organic carboxylic acid, wherein the metal is selected from the group consisting of calcium, magnesium and lithium and wherein said organic carboxylic acid is selected from the group consisting of lauric acid, palmitic acid, stearic acid, hydroxystearic acid, behenic acid, citric acid, tartaric acid and lactic acid. Calcium stearate, calcium tartrate, calcium citrate and calcium hydroxystearate are preferably used.

Said metallic salts are added at a ratio of 0.01 to 5% by weight based on the whole composition. The addition thereof at a ratio less than 0.01 to 5% by weight leads to an insufficient effect while the addition thereof at a ratio more than 0.01 to 5% by weight leads to a decrease of physical properties of molded products according to circumstances. The addition thereof at a ratio of 0.05 to 0.5% by weight based on the whole composition is preferable.

Either homopolymer or copolymer of acetal may be used for polyacetal used in the present invention. The polymerization degree of said polyacetal is not limited. It is necessary for said polyacetal to have moldable fluidity and sufficient mechanical properties as products.

Also various kinds of antioxidant and anti-acid agent may be added to the composition of the present invention.

Said antioxidants include various kinds of phenol such as 2,2'-methylene-bis (4-methyl-6-t-butyl-phenol), hexamethyleneglycol-bis[β-(3,5-di-t-butyl-4-hydroxyphenol)propyonate], tetrakis[methylene-3(3,5-di-t-butyl-4-hydroxy-phenyl) propyonate] methane, triethyleneglycol-bis-3-(3-t-butyl-4-hydroxy-5-methylphenyl) propyonate, 1,3,5-tri-methyl-2,4,6-tris (3,5-di-t-butyl-4-hydroxy-benzyl) benzene, n-octa-decyl-3-(4'-hydroxy-3',5'-di-t-butylphenol) propyonate, 4,4'-methylene-bis (2,6-di-t-butylphenol), 4-hydroxy-methyl-2,5-di-t-butylphenol, 1,3,5-tris(4-t-butyl-3-hydroxy-2,6-dimethylbenzyl) isocyanurate, N,N'-hexamethylenebis (3,5-di-t-butyl-4-hydroxy-hydroxynamide, hindered phenols, condensation products of N-phenyl-N'-isopropyl-p-phenylenediamine, N,N'-diphenyl-p-phenylenediamine, 4,4'-bis (4-α,α-dimethylbenzyl) diphenylamine or diphenylamine with acetone and amines such as N-phenyl-β-naphthyl-amine and N,N'-di-β-naphthyl-p-phenylenediamine.

Further, said anti-acid agents include urea, dicyandiamide, melamine, polyamide and the like.

Said aliphatic esters of polyvalent alcohols having hydroxyl groups used in polyacetal resin composition of the present invention include aliphatic ester alcohols having at least one hydroxyl group and at least one ester group, such as monoglyceride of stearic acid, palmitic acid, myristic acid and lauric acid, obtained by the reaction of natural aliphatic acids such as lauric acid, myristic acid, palmitic acid, stearic acid, alaquinic acid, behenic acid, oleic acid and hydroxystearic acid or synthetic aliphatic acids similar to said natural aliphatic acids with polyvalent alcohols such as glycerine, pentaerythritol, diglycerine and sorbitol.

Although polyethyleneglycols including liquid ones having comparatively small molecular weights to solid ones having comparatively large molecular weights, can be used for said polyethyleneglycol in the present invention, polyethyleneglycol having molecular weights of 1,000 to 20,000 is preferably used. The aliphatic ester of a polyhydric alcohol is used in a conventional amount, preferably at least 0.05 percent by weight, especially from 0.05 to 5 percent by weight. The polyethylene glycol is used also in a conventional amount, preferably at least 0.1 percent by weight, especially from 0.1 to 10 percent by weight. It is desirable that the composition according to the invention is prevented from any troubles due to bleeding by adjusting proportions of respective ingredients. It has been mentioned in U.S. Patent No. 42 74 986 relates a composition which comprises polyacetal, a polyhydric alcohol having hydroxy groups and polyethyleneglycol and eventually provides an excellent antistatic property. In comparison with that prior art, a polyacetal resin composition according to the present invention shows thermal stability and further improved antistatic property by further adding organometallic salts thereto.

A composition according to the present invention can be prepared in a mixer such as usual extruder.

The antistatic effect according to the present invention can be sufficiently achieved even though resin other than polyacetal, for example EVA, polyurethane and the like, also exists. In addition, also various kinds of additives such as inorganic fillers, for example glass, mica and talc and pigments may be added. Further, other antistatic agents also may be added.

The present invention will be detailly described below by reference to the preferred embodiments and the reference embodiments. The evaluation of antistatic property was carried out by measuring a half-value period of electrostatic voltage after placing a flat plate made of polyacetal resin compositions prepared by extrusion molding for 48 hours at 20°C and 65 RH% while the evaluation of the stability of polyacetal was carried out by the quantitative analysis of formaldehyde extracted into hot water after submerging pellets of a composition of the present invention of 50 g into water and boiling them for one hour at 100°C.

Preferred embodiments 1 to 8, reference embodiment 1

Polyethylene glycol, glycerine monostearate and organometallic salts are added to acetal copolymer (Duracon M270-02 manufactured by Polyplastics Co., Ltd.) at various kinds of ratio as shown in Table 1 and the resulting compositions are extruded by a 40 mm-monoaxial extruder to obtain pellets. Then the resulting pellets are previously dried at 80°C and injection molded to obtain test pieces. The resulting test pieces are tested on half-value period after laying them under the above described appointed conditions. The results are shown in Table 1 together with the measurement results on stability of pellets. In addition, the results evaluated similarly to those in the preferred embodiments 1 to 8 for the compositions not containing said organometallic salts are also shown in Table 1 by way of comparison.

It is found that the above described results that a composition according to the present invention has remarkably excellent antistatic property and is superior also in stability.

# EP 0 110 108 B1

TABLE 1

| | Additive (parts by weight) | | | | Result | |
|---|---|---|---|---|---|---|
| | Glycerine monostearate | Polyethylene glycol | Organometallic salt | | Half-value period of electrostatic voltage (seconds) | Formaldehyde extracted (% by weight) |
| **Preferred embodiment** 1 | 0.25 | 0.75 | (Ca-St) | 0.1 | 0.5 | 0.0189 |
| 2 | 0.25 | 0.75 | (Ca-Ta) | 0.1 | 0.5 | 0.0184 |
| 3 | 0.25 | 0.75 | (Ca-StOH) | 0.1 | 0.6 | 0.0195 |
| 4 | 0.25 | 0.75 | (Li-Ci) | 0.1 | 0.5 | 0.0228 |
| 5 | 0.15 | 0.85 | (Ca-St) | 0.3 | 14.0 | 0.0165 |
| 6 | 0.15 | 0.85 | (Ca-Ta) | 0.3 | 0.9 | 0.0220 |
| 7 | 0.15 | 0.85 | (Ca-StOH) | 0.3 | 4.0 | 0.0220 |
| 8 | 0.15 | 0.85 | (Li-Ci) | 0.1 | 1.5 | 0.0247 |
| 9 | 0.15 | 2.0 | (Ca-StOH) | 0.1 | 4 | 0.012 |
| 10 | 0.15 | 2.0 | (Ca-Ta) | 0.1 | 3 | 0.016 |
| 11 | 0.20 | 1.0 | (Ca-Ci) | 0.1 | 2 | 0.014 |
| 12 | 0.20 | 1.0 | (Ca-StOH) | 0.1 | 4 | 0.015 |
| 13 | 0.50 | 0.5 | (Ca-StOH) | 0.1 | 0.5 | 0.014 |
| 14 | 0.35 | 0.75 | (Ca-StOH) | 0.1 | 0.5 | 0.015 |
| **Reference embodiment** 1 | 0.25 | 0.75 | — | | 24.6 | 0.0260 |
| 2 | 0.15 | 0.85 | — | | 60 | 0.0286 |
| 3 | 0.20 | 1.0 | — | | 46 | 0.0180 |

Ca-St: Calcium stearate
Ca-Ta: Calcium tartrate
Ca-StOH: Calcium hydroxystearate
Li-Ci: Lithium citrate
Ca-Ci: Calcium citrate
Polyethylene glycol having molecular weight of 4,000

## Claims

1. A polyacetal composition comprising a polyacetal, an aliphatic acid ester of a polyhydric alcohol having a hydroxy group and polyethylene glycol, characterized in that the composition further contains 0.01 to 5 percent by weight, based on the total composition, of a metal salt of an organic carboxylic acid, wherein the metal is selected from the group consisting of calcium, magnesium and lithium and wherein said organic carboxylic acid is selected from the group consisting of lauric acid, palmitic acid, stearic acid, hydroxystearic acid, behenic acid, citric acid, tartaric acid and lactic acid.

2. A polyacetal composition as claimed in Claim 1, in which the aliphatic ester of a polyhydric alcohol is contained in an amount of 0.05 to 5 percent by weight and the polyethylene glycol is contained in an amount of 0.1 to 10 percent by weight.

3. A polyacetal composition as claimed in Claim 1, in which said metal salt of an organic carboxylic acid is selected from the group consisting of calcium stearate, calcium tartrate, calcium citrate, calcium hydroxystearate and lithium stearate.

4. A polyacetal composition as claimed in Claim 1, in which said polyacetal is a homopolymer of acetal or a copolymer of acetal.

5. A polyacetal composition as claimed in Claim 1, which further comprises an antioxidant, an anti-acid agent, another resin, an antistatic agent, an inorganic filler and/or a coloring matter.

6. A polyacetal molded article as obtained from said polyacetal composition as defined in Claim 1.

**Patentansprüche**

1. Polyacetalzusammensetzung, umfassend ein Polyacetal, einen aliphatischen Säureester eines mehrwertigen Alkohols mit einer Hydroxygruppe und Polyethylenglykol, dadurch gekennzeichnet, daß die Zusammensetzung weiterhin 0,01 bis 5 Gew.-%, bezogen auf die gesamte Zusammensetzung, eines Metallsalzes einer organischen Carbonsäure enthält, wobei das Metall gewählt wird aus der Gruppe, bestehend aus Calcium, Magnesium und Lithium und wobei die organische Carbonsäure gewählt wird aus der Gruppe, bestehend aus Laurinsäure, Palmitinsäure, Stearinsäure, Hydroxystearinsäure, Behensäure, Zintronensäure, Weinsäure und Milchsäure.

2. Polyacetalzusammensetzung nach Anspruch 1, wobei der aliphatische Ester eines mehrwertigen Alkohols in einer Menge von 0,05 bis 5 Gew.-% und das Polyethylenglykol in einer Menge von 0,1 bis 10 Gew.-% enthalten sind.

3. Polyacetalzusammensetzung nach Anspruch 1, wobei das Metallsalz einer organischen Carbonsäure gewählt wird aus der Gruppe, bestehend aus Calciumstearat, Calciumtartrat, Calciumcitrat, Calciumhydroxystearat und Lithiumstearat.

4. Polyacetalzusammensetzung nach Anspruch 1, wobei das Polyacetal ein Homopolymer von Acetal oder ein Copolymer von Acetal ist.

5. Polyacetalzusammensetzung nach Anspruch 1, die weiterhin ein Antioxidationsmittel, ein Antisäuremittel, ein anderes Harz, ein antistatisches Mittel, einen anorganischen Füllstoff und/oder ein Färbematerial enthält.

6. Geformter Polyacetal-Gegenstand, erhalten aus der Polyacetalzusammensetzung wie in Anspruch 1 definiert.

**Revendications**

1. Composition de polyacétal comprenant un polyacétal, un ester d'acide aliphatique d'un polyalcool ayant un groupe hydroxy et un polyéthylène glycol, caractérisée en ce que la composition contient en outre 0,01 à 5% en poids, par rapport à la composition totale, d'un sel métallique d'un acide carboxylique organique, dans lequel le métal est choisi parmi le calcium, le magnésium et le lithium et dans lequel cet acide carboxylique organique est choisi parmi l'acide laurique, l'acide palmitique, l'acide stéarique, l'acide hydroxystéarique, l'acide béhénique, l'acide citrique, l'acide tartrique et l'acide lactique.

2. Composition de polyacétal selon la revendication 1, dans laquelle l'ester aliphatique de polyalcool est contenu dans une quantité de 0,05 à 5% en poids et le polyéthylène glycol est contenu dans une quantité de 0,1 à 10% en poids.

3. Composition de polyacétal selon la revendication 1, dans laquelle ce sel métallique d'un acide carboxylique organique est choisi parmi le stéarate de calcium, le tartrate de calcium, le citrate de calcium, l'hydroxystéarate de calcium et le stéarate de lithium.

4. Composition de polyacétal selon la revendication 1, dans laquelle ce polyacétal est un homopolymère d'acétal ou un copolylème d'acétal.

5. Composition de polyacétal selon la revendication 1, qui comprend en outre un antioxydant, un agent anti-acide, une autre résine, un agent anti-statique, une charge minérale et/ou une matière colorante.

6. Article moulé de polyacétal obtenu à partir de cette composition de polyacétal telle que définie dans la revendication 1.